(19) Europäisches Patentamt
European Patent Office
Office européen des brevets

(11) **EP 3 959 664 B1**

(12) **EUROPEAN PATENT SPECIFICATION**

(45) Date of publication and mention
of the grant of the patent:
**18.03.2026 Bulletin 2026/12**

(21) Application number: **20719662.7**

(22) Date of filing: **24.04.2020**

(51) International Patent Classification (IPC):
*G06N 3/063* (2023.01)    *G06N 3/04* (2023.01)
*G06F 15/82* (2006.01)    *G06F 9/54* (2006.01)
*G06N 3/08* (2023.01)

(52) Cooperative Patent Classification (CPC):
**G06N 3/063; G06F 9/542; G06N 3/08**

(86) International application number:
**PCT/EP2020/061492**

(87) International publication number:
**WO 2020/216921 (29.10.2020 Gazette 2020/44)**

(54) **DATA PROCESSING SYSTEM AND DATA PROCESSING METHOD**

DATENVERARBEITUNGSSYSTEM UND DATENVERARBEITUNGSVERFAHREN

SYSTÈME DE TRAITEMENT DE DONNÉES ET PROCÉDÉ DE TRAITEMENT DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.04.2019 EP 19171015**

(43) Date of publication of application:
**02.03.2022 Bulletin 2022/09**

(73) Proprietor: **Snap Inc.**
**Santa Monica, CA 90405 (US)**

(72) Inventors:
• **FEROUGE, Aimee**
**5656 AG Eindhoven (NL)**

• **PIRES DOS REIS MOREIRA, Orlando Miguel**
**5656 AG Eindhoven (NL)**
• **LINDWER, Menno**
**5656 AG Eindhoven (NL)**
• **KIEVITS, Peter**
**5656 AG Eindhoven (NL)**

(74) Representative: **V.O.**
**P.O. Box 87930**
**2508 DH Den Haag (NL)**

(56) References cited:
**EP-A1- 3 343 461      US-A1- 2016 004 962**
**US-A1- 2016 364 644**

**Description**

BACKGROUND

The present disclosure pertains to a data processing system.

The present disclosure further pertains to a method for operating a data processing system.

A data processing system comprises a plurality of data processing system elements, and a message exchange facility enabling the data processing system elements to mutually exchange event messages. Such a data processing system is a powerful tool for processing and classifying multidimensional data, such as image data. A data processing system for this purpose may have an input facility to receive data array values from array elements that each have a respective address in a data array. A fixed mapping may be contemplated to provide the data contained in the data array as input to corresponding data processing system elements. However, in practice a different mapping may be required, depending on the circumstances. Likewise it may be required to perform message transfer between subsets of data processing system elements according to mutually different mappings dependent on circumstances. To achieve such versatile mappings, it may be contemplated to use a lookup table (LUT) to map each source address to a respective destination. This requires however a substantial amount of storage space. Accordingly, there is a need to enable a versatile mapping with a modest requirement of storage space.

Reference is further made to the following prior art: EP3343461 discloses a neuromorphic processor comprising a router to translate at least one neuron address containing wildcard values into two or more neuron IDs to establish the fan-in and/or fan-out connections between the neurons. US2016004962 discloses a neurosynaptic core circuit that is programmed with synaptic connectivity information based on the synaptic weight arrangements. The core circuit is configured to classify one or more objects of interest in the input data.

SUMMARY

In order to address the above-mentioned need an improved neural processing system is provided as claimed in claim 1.

The improved neural processing system comprises a mapping facility that is configured to selectively compute at least one system element identifier as a mapping function of event message source data, in accordance with one or more parameters specified for the mapping function. The event message is directed via the message exchange facility to the data processing system element having the system element identifier computed by the mapping facility.

In an embodiment, the event message source data comprises one or more of an event message source identifier and a value to be conveyed by said message. The parameterized mapping function may for example selectively compute one or more destinations of the message as a function of the event message source identifier. The event message source identifier is for example an address of an array element in an array, or a system element identifier of a data processing system element. A value to be conveyed by the message may be the value of an array element or a value to be conveyed generated by a data processing system element. A value based mapping may for example be applied for computation of a histogram, wherein each destination of the mapping corresponds to a bin in the histogram, i.e. a specific value or a range of values.

The event message source identifier may specify the source in any of one dimension, two-dimensions or a higher dimension. For example event message source identifier may be a scalar to indicate a position in a one-dimensional array, wherein subsequent array elements hold a value of a variable at subsequent points in time. Likewise a one-dimensional system element identifier may indicate a time dependent variable. For example the data processing system may be used for simulation that computes an expected development in time of a variable and so that each subsequent data processing system element in the order specified by the system element identifier specifies a subsequent expected value for the variable. Alternatively the event message source identifier as well as the system element identifier computed by the mapping may be of a higher dimensional nature. For example the event-message source identifier may have a first and a second source identifier component to identify a pixel in an image, a first, a second and a third source identifier component to identify a pixel in an image at a point in time, or a voxel in a 3D-space, or a first, a second, a third and a fourth source identifier component to identify a voxel in space at a point in time. Alternatively, the event-message source identifier may specify an element in an acoustic field, a pressure field, a temperature distribution and the like.

Likewise the system element identifier may be specified with one or more components. The data processing elements may for example be hierarchically organized in clusters and the system element identifier may for example have a first system element identifier component to identify the main cluster comprising the data processing element, a sub-cluster in which that data processing element is comprised in that main cluster and a further component to identify that data processing element within that sub-cluster. It is not necessary that the dimension of the event-message source identifier and the dimension of the system element identifier are the same. For example a projection may be performed to a lower dimensional space.

The parametric function may for example have control parameters to select a mapping from one or more of a one to one mapping, a many to one mapping, and a one to many mapping. In a one to one mapping, which may be a default mapping, each source identifier value is mapped to a respective system element identifier value. A many to one mapping may provide for a subsampling operation, therein each system element identifier value corresponds to a set of source identifier values. Respective sets of source identifier values may partially overlap. In this case, the identified data processing system elements may for example compute an average value from the data values conveyed with the messages, or may selectively accept a part of the messages. In a one to many mapping a single source identifier value corresponds to a plurality of system element identifier values. This type of mapping may allow for simultaneous, mutually different processing operations of source data.

As noted, the plurality of data processing system elements in the data processing system may be organized in a plurality of data processing system clusters. The data processing system elements therein may have a system element identifier with a first component, a cluster identifier that specifies the cluster of which they are a member and by a local identifier specifying their identity within that cluster. The mapping facility may comprise a first and a second mapping module, wherein the first mapping module provides a mapping to a cluster identifier for at least one of the plurality of clusters, and wherein the second mapping module provides a mapping to a local identifier. This allows for a very efficient mapping.

In an embodiment the mapping facility is configured or configurable to map a contiguous set of source elements, e.g. array elements or data processing elements, to a non-contiguous set of data processing system elements.

Alternatively, or in addition, the mapping facility may be configured or configurable to map all source elements to one or more data processing system elements.

In an embodiment the mapping facility is configured or configurable to map a true subset of the source elements to one or more data processing system elements. This embodiment is particularly suitable for focusing attention on one or more regions of interest in a data source, e.g. a data array or a set of data processing system elements, The region of interest may for example have a fixed position within the data source. These may for example correspond to a region facing a window of a building in images obtained with a security camera.

At least one region of interest is determined dynamically. For example an object tracking module may be provided to dynamically determine the position of the true subset. To that end the data processing system comprises a region selection facility to identify one or more regions of interest in the data array. As specified in independent claim 1 and 11 and in the subsequent detailed description it therewith controls the mapping facility to achieve that it provides for a mapping of these one or more regions to respective destinations in the data processing system. The data processing system may comprise the mapping facility as one of a plurality of mapping facilities, wherein each of the mapping facilities is configured to map one of the regions to its destination in the data processing system.

Additionally, an improved neural processing system operating method is provided in claim 11.

BRIEF DESCRIPTION OF THE DRAWINGS

These and other aspects are described in more detail with reference to the drawings. Therein:

FIG. 1 schematically shows an embodiment of a data processing system according to the present disclosure.
FIG. 2 schematically shows an embodiment of a first type of data processing system cluster that may be part of a data processing system according to the present disclosure.
FIG. 3 schematically shows an embodiment of a second type of data processing system cluster that may be part of a data processing system according to the present disclosure.
FIG. 4 schematically shows an embodiment of a mapping facility that may be part of a data processing system according to the present disclosure.
FIG. 5 schematically shows another embodiment of a mapping facility that may be part of a data processing system according to the present disclosure.
FIG. 6 shows a first example of a mapping provided in an embodiment of a mapping facility that may be part of a data processing system according to the present disclosure.
FIG. 7 shows a second example of a mapping provided in an embodiment of a mapping facility that may be part of a data processing system according to the present disclosure.
FIG. 8 shows a third example of a mapping provided in an embodiment of a mapping facility that may be part of a data processing system according to the present disclosure.
FIG. 9 shows a fourth example of a mapping provided in an embodiment of a mapping facility that may be part of a data processing system according to the present disclosure.
FIG. 10 schematically shows a still further embodiment of a mapping facility that may be part of a data processing system according to the present disclosure.

DETAILED DESCRIPTION OF EMBODIMENTS

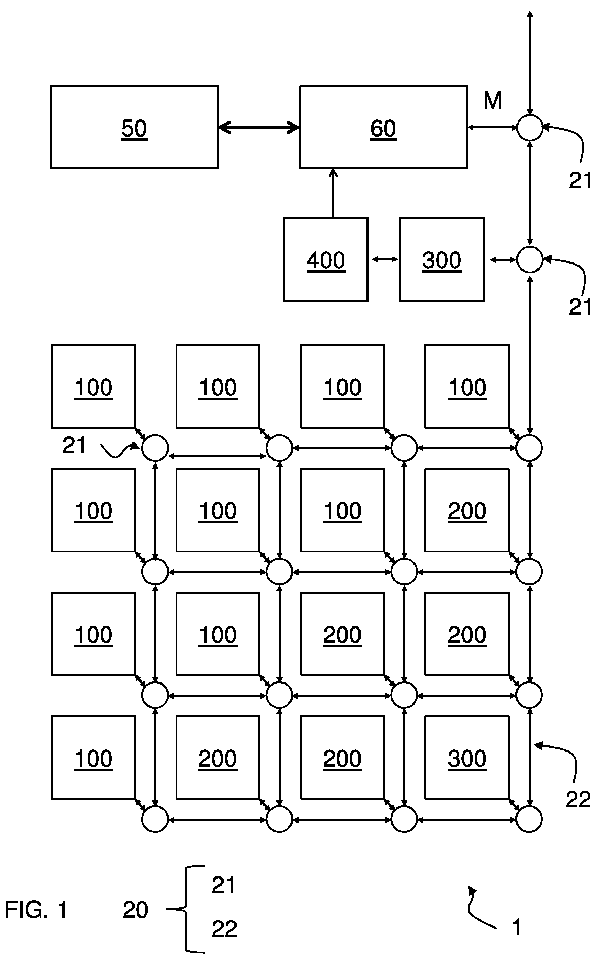

FIG. 1 schematically shows a data processing system 1 comprising a plurality of data processing system elements. The data processing system elements each have a proper storage location in the processing system for storing a state and having a respective system element identifier that identifies the data processing system element within the data processing system. In the embodiment shown, the data processing system elements are organized in data processing system clusters 100, 200. Neuromorphic data processing system clusters 100 comprise neuromorphic data processing system elements, suitable for neuromorphic operations, i.e. operations mimicking neural behavior. Arithmetical data processing system clusters 200 comprise arithmetic data processing system elements, suitable for arithmetic computations.

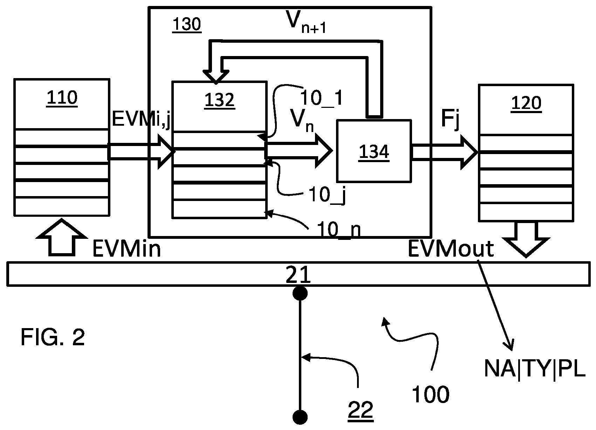

FIG. 2 schematically shows an embodiment of a neuromorphic data processing system cluster 100. The neuromorphic processing cluster 100 further includes a neuromorphic processor 130 having a set of state memory entries 10_j in a neuromorphic state memory 132 for storing a value representative of a neuromorphic state associated with a neuromorphic element and a computation facility 134 to update the neuromorphic state associated with neuromorphic elements that are indicated as the destination of an event message. In FIG. 2 this is schematically illustrated in that the computation facility 134 fetches a value $V_{n,j}$ indicative for a current neuromorphic state associated with a neuromorphic element j from memory location 10_j and writes back to that location the value $V_{n+1,j}$ indicative for the updated neuromorphic state. As further specified below, if it is the case that the value for the neuromorphic state tends to exceed a threshold potential, the neuromorphic element j may issue a control signal $F_j$ to the message transmitting facility 120 that causes the latter to transmit one or more event messages EVMout.

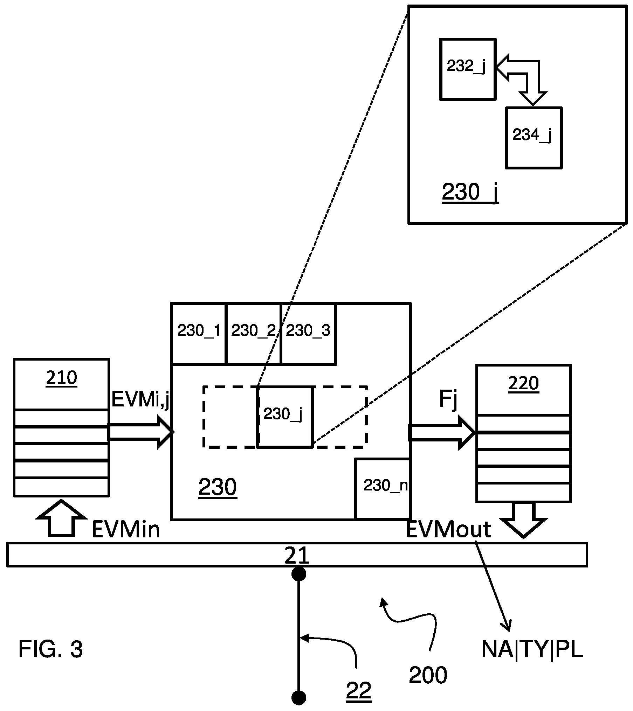

FIG. 3 schematically shows an example of an arithmetical data processing system cluster 200 comprising a plurality (230) of data processing system elements 230_1, 203_2, 230_3,...230_j, ..,230_n. The data processing system elements, as show for example for data processing system element 230_j comprise a proper memory location 234_j for storing its state and a proper arithmetic element 232_j. The arithmetic element 232_j of a data processing system element 230_j is configured to update the state associated with data processing system element 230_j. The arithmetic element 232_j of a data processing system element 230_j is further configured to issue a control signal $F_j$ to the message transmitting facility 220 that causes the latter to transmit one or more event messages EVMout. Hence contrary to the exemplary neuromorphic processing system cluster 100, the arithmetical data processing system cluster 200 comprises an update facility in the form of a collection of arithmetic elements 232_j, one for each data processing system element 230_j in that cluster. Alternatively, it may be contemplated to provide an arithmetical data processing system cluster 200 with a shared update facility, or with a set of update facility modules, each for a group of data processing system elements in that cluster. It may also be contemplated to provide each data processing system element in a neuromorphic cluster 100 with a proper neuromorphic update element, or to provide a neuromorphic cluster 100 with a set of update facility modules, each for a group of data processing system elements in that cluster.

Exchange of messages in the data processing system 1 is enabled with a message exchange facility that is shared by the plurality of data processing system elements. The plurality of data processing system elements is configured to transmit event messages via the message exchange facility and to receive event messages transmitted via the message exchange facility. In the embodiment shown the message exchange facility is configured hierarchically. At a first level the message exchange facility includes a network 20 with network nodes 21 and network connections 22 to enable a global message transfer between clusters 100, 200 and other system components, such as mapping facility 60 and feedback controller 300, to be discussed in more detail below. At a local level the neuromorphic data processing system clusters 100 are provided with a message reception module 110 coupled to network node 21, to receive event messages EVMin from the message exchange network 20, and a message transmission module 120 coupled to the network node 21, to transmit event messages via the message exchange network 20. Similarly, the arithmetic data processing system clusters 200 are provided with a message reception module 210, and a message transmission module 220. Alternatively the message transfer may be organized in a single level, for example in case the data processing system 1 only has a relatively modest number of data processing system elements. Alternatively, for example in case the data processing system has a relatively larger number of data processing system elements, the message exchange facility may be configured with a higher number of levels.

As shown in FIG. 1, the data processing system 1 further comprises a mapping facility 60 that is configured to selectively compute at least one system element identifier $N_{ID}$ as a mapping function of event message source data, in accordance with one or more parameters specified for the mapping function. Therewith it is achieved that the event message is directed via the message exchange facility to the data processing system element specified by the computed system element identifier $N_{ID}$. The event message source data provided as input to the mapping function may for example comprise one or more of an event message source identifier and a value conveyed by said message.

The event message source identifier may be a system element identifier. In that case, the mapping facility is configured to selectively direct event messages from a first subset of data processing system elements to a second subset of data processing system elements, wherein the system element identifier and/or a state of the data processing system elements in the first subset are event message source data provided as input to the mapping function. The event message source identifier may alternatively or additionally be used as an identifier for an other source of event messages. An example thereof is shown in FIG. 1. In the embodiment shown therein, the data processing system 1 further comprising an input facility 50 to receive data from a data array of separately addressable array elements comprising a respective data value. The input facility 50 is configured to transmit data event messages having a message content indicative for their data value via the message exchange facility. The mapping facility 60 determines the destination of the event messages using the mapping function, and the array element address and/or the data value are message source data provided as input to the mapping function.

The data processing system 1 further comprises a region selection facility 400 that serves to identify one or more regions of interest in the data array. The region selection facility 400 is configured to control the mapping facility 60 to achieve that it provides for a mapping of these one or more regions to respective destinations in the data processing system. The regions of interest to be mapped may be determined statically, e.g. an operator may define these regions upon configuring the system. Alternatively, or additionally regions of interest to be mapped may be determined dynamically. In the embodiment shown this is achieved in that the data processing system 1 further comprises a feedback controller 300 that uses classification results from the data processing system to control the region selection facility 400. As shown in FIG. 1, data processing system clusters 100, 200, may transmit their classification results as messages via the message exchange facility 20 to the feedback controller 300.

Not only the selection of the region of interest or the subset of data processing system elements of interest may be determined dynamically, also the nature of the mapping may be determined dynamically. For example, at least one parameter of the one or more parameters specified for the mapping function is determined dynamically.

Whereas FIG. 1 only shows a single mapping facility 60, additional mapping facilities may be present. The components shown in FIG. 1 may further be coupled for example via a sub-network, to other components, such as dedicated processing units or a CPU. These can be considered as part of the system. The one or more of such additional mapping facilities may be dedicated to provide a mapping to such further system components.

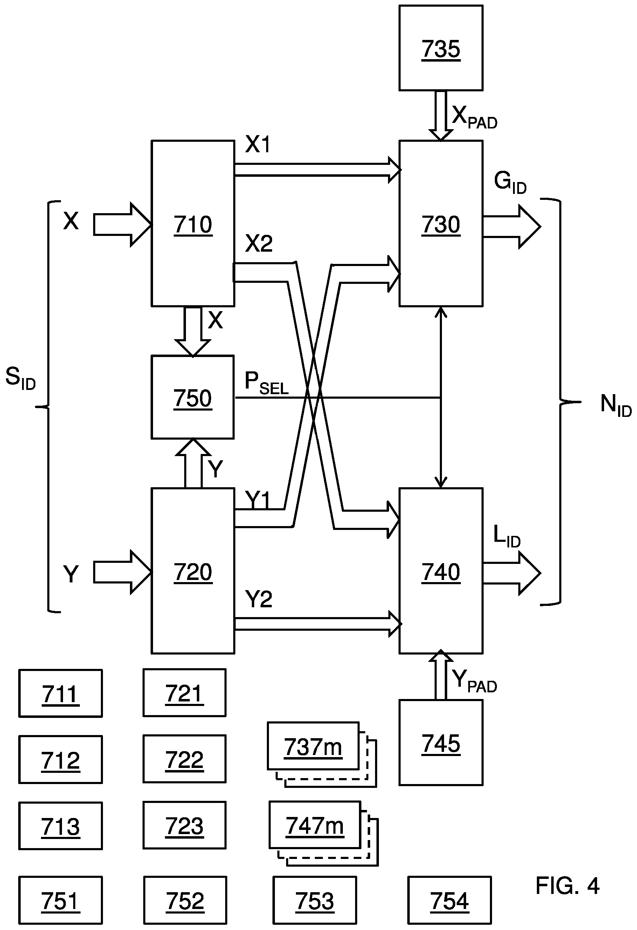

One embodiment of the parametric mapping function suitable for the mapping facility 60 is shown in FIG. 4. In the embodiment shown therein, it is presumed that the system element identifier and the event message source identifier have a binary representation, and the mapping function comprises one or more of a bitwise selection and reordering in accordance with parameters specified for the mapping function.

In the embodiment shown, it is presumed that the event message source identifier $S_{ID}$ has a first and a second source identifier component X,Y, which represent the coordinates of a pixel in a two-dimensional image in this case. Alternatively, the message source identifier may have a single component or have more than two components, depending on the dimension of the input data. The system element identifier $N_{ID}$ likewise have a first and a second system element identifier component $G_{ID}$, $L_{ID}$, wherein the first one $G_{ID}$ is a global identifier, which indicates a module within the system 1, e.g. a specific neuromorphic data processing cluster 100, or a specific arithmetic data processing cluster 200, and wherein the second one $L_{ID}$, is a local identifier, indicating a specific data processing element within the specified module. Alternatively, the system element identifier $N_{ID}$ may only have a single system element identifier component, or may have more than two components, depending on the architecture of the system.

In the embodiment shown, the mapping unit comprises an input selection unit having a pattern identifier stage 750 and an enable stage 730, 740. The pattern identifier stage 750 determines whether a first subset of the event message source identifier complies with a predetermined pattern, and indicates this with signal $P_{SEL}$ and the enable stage 730, 740 selectively passes a second subset of bits of the event message source identifier if compliance is confirmed. In the embodiment shown, the second subset of bits comprises bits X1, X2 and Y1, Y2. The enable stage 730 selectively passes bits X1 and bits Y1 as part of the global system element identifier component $G_{ID}$, $L_{ID}$ and the enable stage 740 selectively passes bits X2 and bits Y2 as part of the local system element identifier component $L_{ID}$.

In the embodiment shown, the selection of bits X1, X2, Y1, Y2 is controlled a plurality of mapping registers 737m, 747m. In the embodiment shown, each mapping register 737m designates a respective bit of the event message source identifier $S_{10}$ as the source for a respective bit in the global component $G_{ID}$ of the system element identifier ($N_{ID}$). And each mapping register 747m designates a respective bit of the event message source identifier $S_{10}$ as the source for a respective bit in the local component $L_{ID}$ of the system element identifier $N_{ID}$.

Operation of the pattern identifier stage may be controlled by as set of control registers 711, 712, 721, 722. Therein X-Mask register 711 specifies for each bit in the X-component whether or not it has to match a value specified in the X-Match register 712. Similarly, the Y-Mask register 721 specifies for each bit in the Y-component whether or not it has to match a value specified in the Y-Match register 722.

A source identifier component, e.g. an X or Y component may comprise for example M bits and the N bits of lowest significance therein may be the first subset of that component, wherein N is an integer in the range from 1 to M-1. In this way the mapping facility may provide for a subsampling of source data. As another example, N bits of highest significance therein may be the first subset of that component, wherein N is an integer in the range from 1 to M-1. In this way, the mapping facility may select source data from a specific region of interest.

In the embodiment shown, the mapping facility further comprises a merge unit that is configured to modify the data processing element identifier by merging therewith one or more padding bits. In this embodiment the enable stage 730 functions as the merge unit that modifies the global component $G_{ID}$ of the data processing element identifier by merging therewith one or more padding bits $X_{PAD}$ from padding bit register 735. Similarly, the enable stage 740 functions as the merge unit that modifies the local component $L_{ID}$ of the data processing element identifier by merging therewith one or more padding bits $Y_{PAD}$ from padding bit register 745.

The pattern identifier stage 750 may further comprise a clip module to selectively block input from an event message source if the value of a source identifier component is less than a first threshold value and/or to block input from the event message source if the value of the component is greater than a second threshold value. In the embodiment shown, the mapping facility comprises a first clipping register 751 to hold a first threshold value for the X-component of the source identifier, a second clipping register 752 to hold a second threshold value for the X-component of the source identifier, a third clipping register 753 to hold a first threshold value for the Y-component of the source identifier, and a fourth clipping register 754 to hold a second threshold value for the Y-component of the source identifier.

In the embodiment shown, the mapping facility has is configured to subtract an offset value from a component value, wherein the resulting component value replaces the original component value. In the embodiment shown this is achieved in that the mapping facility has offset registers 713, 714 that hold an X-offset value and a Y-offset value respectively. X-input section 710 for the X-component subtracts the X-offset value from the X-component, and Y-input section 720 for the Y-component subtracts the Y-offset value from the Y-component.

Still further the mapping facility may be configured to apply an offset value to the system element identifier $N_{10}$, to provide for a redirection of messages to other system elements.

As noted above, a data value in an event-message may serve as message source data that is provided as input to the mapping function. As a first example, the mapping function may map an event-message to a system element identifier ($N_{ID}$) that corresponds to the data value in the event-message, or that corresponds to a respective data value range that comprises that data value. The recipient data processing element specified by the system element identifier may then count the number of received messages. Therewith the set of counts computed by the set of data processing elements corresponding to the set of potential data values, or the set of potential data value ranges represents a histogram of the input data. As another example, the input facility 50 could be a camera which sends binary encoded information about pixel brightness variations. For example values +1, -1 may respectively indicate an increase and a decrease in brightness of the pixel. Based on the value, the mapping facility 60 may select between different data processing system elements that are to be indicated as the recipient of the message.

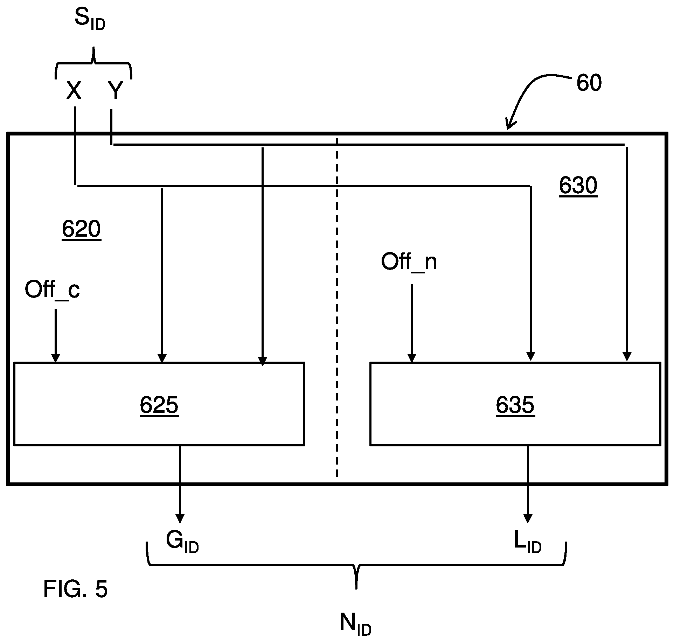

FIG. 5 shows an alternative embodiment of a mapping facility 60. In the embodiment shown, the mapping facility 60 has a global mapping section 620 for computing a global identifier component $G_{10}$ of the processing system element identifier $N_{ID}$. The mapping facility 60 further has a local mapping section 630 for computing a local identifier component $L_{ID}$ of the processing system element identifier $N_{ID}$. Alternatively, the mapping facility may be provided with a single mapping section or with more than two mapping sections.

The global mapping section 620 comprises a first combine module 625 that computes the global identifier component $G_{10}$ from a first offset Off_c, and the values for the X and the Y coordinate in the source identifier $S_{10}$, dependent on a required mapping. The local mapping section 630 comprises a second combine module 635 that computes the local identifier component $L_{ID}$ from a second offset Off_n, and the values for the X and the Y coordinate in the source identifier $S_{10}$, dependent on the required mapping.

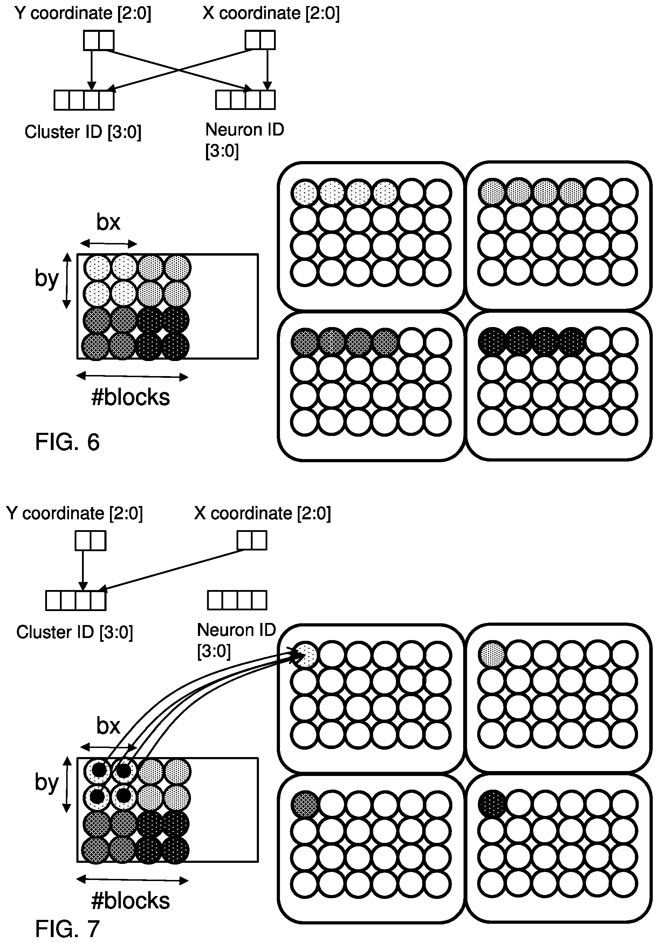

As a first example, FIG. 6 shows a one to one mapping, wherein each respective value of the source identifier $S_{10}$ is mapped to a respective value for the system element identifier $N_{ID}$. In this mapping, the first combine module 625 computes the global component $G_{ID}$ as:

$$G_{ID} = \text{Off\_c} + cr \ll l2blocks + cc,$$

wherein:

$$cr = (y \gg l2by)$$

$$cc = (x \gg l2bx)$$

The second combine module 635 computes the local component $L_{ID}$ as:

$$L_{ID} = \text{Off\_n} + (y \,\&\& my) \ll l2bx + (x \,\&\& mx),$$

The parameters l2by, l2bxx, my, mx, Offs_c and Offs_n used herein to control the mapping may be stored in respective registers of the mapping facility, so that different mappings can be obtained by rewriting these registers.

The parameters l2by, l2bx respectively indicate a number of bits that is required to encode pixel block dimensions (log2). The parameter l2blocks indicates the number of bits required to encoded a stride in terms of horizontal blocks. The parameter Off_c may be used to indicate a number of reserved clusters that are to be skipped in the mapping.

As a further example, FIG. 7 shows a mapping that maps a value range for the source identifier to a respective value for the system element identifier.

In this mapping, the first combine module 625 computes the global component $G_{ID}$ as:

$$G_{ID} = Off\_c + cr \ll l2blocks + cc,$$

wherein:

$$cr = (y \gg l2by)$$

$$cc = (x \gg l2bx)$$

l2bx/l2by are the number of bits required to encode pixel block dimensions (log2) l2blocks are the number of bits required to encoded the stride in terms of horizontal blocks

Off_c can be used to specify a number clusters to be reserved for other use.

The intermediate variables cc/cr indicate the cluster column/row in the mesh

The second combine module 635 computes the local component $L_{ID}$ as:

$$L_{ID} = Off\_n + normx \gg l2quant + normy \ll (l2bx - l2quant),$$

wherein

$$normx = (x \&\& mx)$$

$$normy = (y \&\& my) \gg l2quant$$

$$mx = bx - 1$$

$$my = by - 1$$

mx/my are used to implement a mod(bx/by) operation

Off_n is the number of reserved data processing system elements that are to be skipped normx/normy are pixels that are scaled down to align with the frame TL l2quant is the number of bits required to encode the downsampling factor. In this example the downsampling factor is 2.

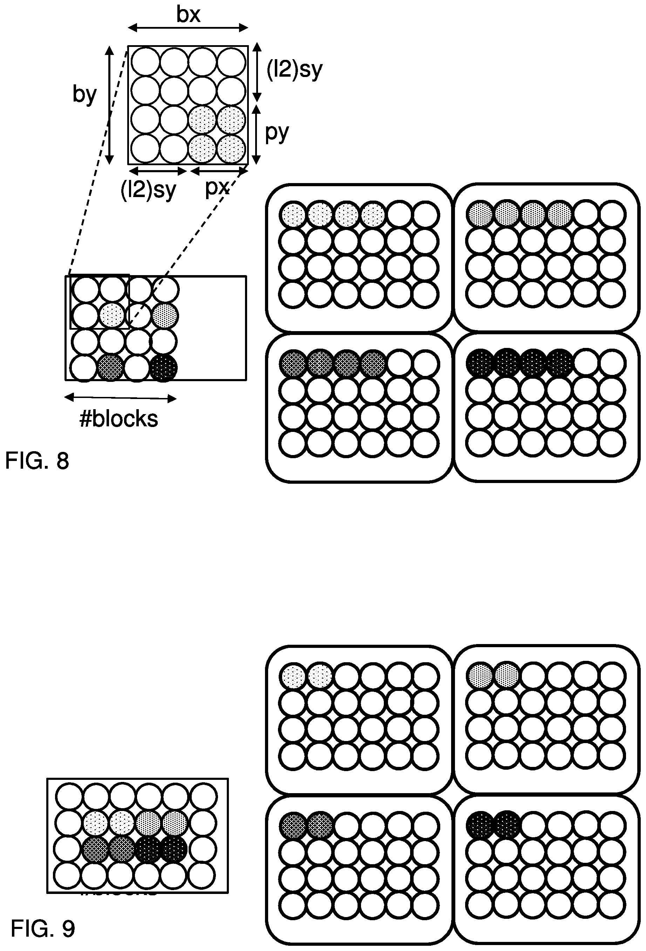

As a further example, FIG. 8 shows a subsampling. In this example, the first combine module 625 computes the global component $G_{ID}$ as:

$$G_{ID} = Off\_c + (cr \ll l2blocks + cc) \&\& roi,$$

wherein:
roi specifies a region of interest

$$cr = (y \gg l2by)$$

$$cc = (x \gg l2bx)$$

As a preliminary step, each block may be normalized to align it with the top-left of the frame

The second combine module 635 computes the local component $L_{ID}$ as:

$$\mathrm{L_{ID}} = \mathrm{Off\_n} + (nc+nr)\&\&roi+offset,$$

wherein:

$$nr=(normy-sy)\ll l2px$$

$$nc=(normx-sx)$$

Therein further sx/sy are the spacings between the block TL and the ROI patch
l2px specifies the number of bits required to encode the patch width Off_n specifies a number of reserved data processing system elements to be skipped.

FIG. 9 shows a further example, wherein the applied mapping is a cropping.

The first combine module 625 computes the global component $G_{ID}$ as:

$$\mathrm{G_{ID}} = \mathrm{Off\_c} + (cr\ll l2blocks+cc)\ \&\&\ roi,$$

wherein:

$$cr=(y\gg l2by)$$

$$cc=(x\gg l2bx)$$

l2blocks specifies the number of bits required to encode the block stride Off_c can be used to specify a number clusters to be reserved for other use.roi is a mask used to filter the pixels that should be mapped

The second combine module 635 computes the local component $L_{ID}$ as:

$$\mathrm{L_{ID}} = \mathrm{Off\_n}+=(y\ \&\&my)\ll l2bx+(x\&\&mx)$$

$$mx=bx-1$$

$$my=by-1$$

nid

mx/my are used to implement a mod(bx/by) operation
Off_n specifies a number of reserved data processing system elements to be skipped.
roi is a mask used to filter the pixels that should be mapped

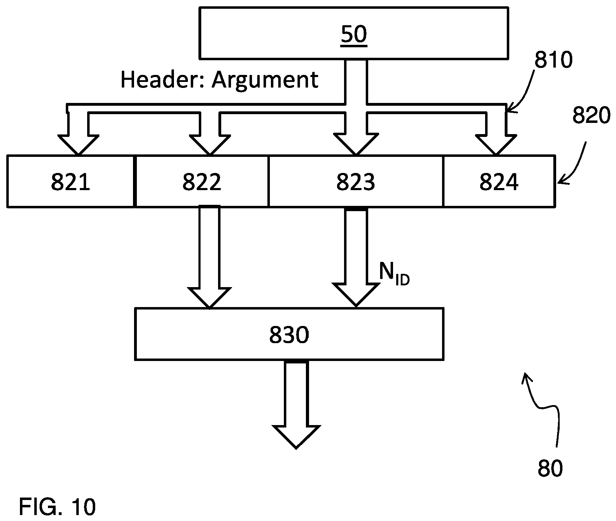

FIG. 10 shows an alternative embodiment of a mapping facility 80. In the embodiment shown, the mapping facility 80 is configured to map event messages from a camera 50. The event-messages are encoded as Header: Argument. The encoding Header indicates a type of argument contained in the message. The encoding is interpreted by dataselector module 824. For example the encoding may specify that the argument is an X-coordinate of a pixel, a Y-coordinate of a pixel, a timestamp or a weight, being a multiplier for the value from the camera. The mapping facility 80 includes a first mapping stage 820 and a second mapping stage 830. The first mapping stage 820 provides for computing a base system element identifier, and the second mapping stage 830 enables multi-casting.

The first mapping stage may comprises a first mapping module 821 that determines a type of message to be directed with the destination indicated by the base system element identifier. The first mapping module 821 may for example comprise a programmable register contains a 2-bit value indicative for the message type as follows.

'00' : L/Neural-1
'01' : R/Neural-2

'10' : Reference (pointer)
'11' : Control

The first option "L/Neural-1" specifies that the message to be transmitted conveys a first input parameter. In case the recipient comprises one or more arithmetic data processing system elements, the first input parameter L is the first input for a basic arithmetic operation. In case the recipient comprises one or more neuromorphic data processing system elements, the first input parameter Neural-1 specifies a value for a first type of neuromorphic computation.

The second option "R/Neural-2" specifies that the message to be transmitted conveys a second input parameter. In case the recipient comprises one or more arithmetic data processing system elements, the first input parameter R is the second input for a basic arithmetic operation. In case the recipient comprises one or more neuromorphic data processing system elements, the second input parameter Neural-2 specifies control data for a second type of neuromorphic computation. The other options can be used for control of the one or more recipient data processing system elements

The first mapping stage 820 may comprises a second mapping module 822 that determines a connection type, such as an indication whether the recipient(s) is/are neuromorphic data processing system element(s) or arithmetic data processing system element(s) and or whether the event-message is to be directed to a single recipient or to a group of recipients.

The third mapping module 823 is configured to actually determine base system element identifier $N_{ID}$ from the source identifier as determined by the input values for X,Y obtained from the camera. As noted, the fourth mapping module 824 retrieves these data from the camera input.

The second mapping stage 830 enables multi-casting. This can be done by calculating an index e.g. 4 bits which points into a synapse memory with a limited choice of patterns. The index points to a synapse memory in a data processing system cluster specifying the target in terms of relative addresses. The second mapping stage 830 broadcasts the original message to those targets having a relative address with respect to base system element identifier as specified by the indexed pattern.

It is noted that various control functions may be performed by dedicated controllers. Alternatively a controller may perform various control functions. For example in a time shared manner. A controller for performing one or more control functions may be implemented in dedicated hardware, in a programmable or configurable device or a combination thereof. The computation unit 30 that updates neural unit states may likewise be implemented in various manners, but is preferably provided as dedicated hardware for optimal performance.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

**Claims**

1. A data processing system (1) comprising

- a plurality (130) of data processing system elements having a respective storage location (10_j) in said processing system for storing a state and having a respective system element identifier ($N_{ID}$) that identifies the data processing system element within said data processing system;
- a message exchange facility (21, 110, 120) shared by said plurality of data processing system elements, said plurality of data processing system elements being configured to transmit event messages via the message exchange facility and to receive event messages transmitted via the message exchange facility;
- an update facility (134) to update the states of respective data processing system elements in accordance with event messages directed to said respective data processing system elements and to enable generation of event messages to be transmitted by respective data processing system elements in accordance with their state;
- a mapping facility (60) being configured to selectively compute at least one system element identifier ($N_{ID}$) as a mapping function of event message source data, the event message being directed via the message exchange facility to the data processing system element specified by the computed system element identifier ($N_{ID}$),

**characterized in that** the mapping facility (60) is configured to selectively compute the at least one system element identifier ($N_{ID}$) in accordance with one or more parameters specified for the mapping function, **in that** the data processing system further comprises an input facility (50) configured to receive data from a data array of array elements each having a respective array element address in said data array and comprising a respective data value, and to transmit data event messages having a message content indicative for their data value via the message exchange facility, wherein the mapping facility (60) determines the destination of said event messages using the mapping function, wherein the array element address and/or the data value are message source data provided as input to the mapping function, **in that** the data processing system further comprises a region selection facility (400) to identify one or more regions of interest in the data array and to control the mapping facility (60) to achieve that it provides for a mapping of these one or more regions to respective destinations in the data processing system, and **in that** the data processing system further comprises a feedback controller (300) using classification results from the data processing system to dynamically determine a region of interest to therewith control the region selection facility (400), wherein the computation of the at least one system element identifier ($N_{ID}$) comprises a logical AND of a mask specifying the dynamically determined region of interest and a result of a function of an x-coordinate and a y-coordinate in the data array, wherein said function is a sum of the y-coordinate that is binary shifted by a first number and the x-coordinate that is binary shifted by a second number.

2. The data processing system (1) according to claim 1, wherein the event message source data comprises one or more of an event message source identifier and a value conveyed by said message.

3. The data processing system (1) according to claim 1 or 2, wherein the mapping facility is configured to selectively direct event messages from a first subset of data processing system elements to a second subset of data processing system elements, wherein the system element identifier and/or a state of the data processing system elements in the first subset are event message source data provided as input to the mapping function.

4. The data processing system (1) according to one of the previous claims, wherein the mapping facility is one of a plurality of mapping facilities.

5. The data processing system (1) according to one of the previous claims wherein the system element identifier and the event message source identifier having an M-bit binary representation, and wherein the mapping function comprises one or more of a bitwise selection and reordering in accordance with parameters specified for the mapping function.

6. The data processing system (1) according to claim 5, comprising an input selection unit having a pattern identifier stage (750) and an enable stage (730, 740), wherein the pattern identifier stage (750) determines whether a first subset of the event message source identifier complies with a predetermined pattern and wherein the enable stage (730, 740) selectively passes a second subset of bits of the event message source identifier if compliance is confirmed, wherein optionally the first subset of bits are the N bits of lowest significance of that component, wherein N is an integer in the range from 1 to M-1, wherein optionally the first subset of bits are the N bits of highest significance of that component, wherein N is an integer in the range from 1 to M-1, the mapping facility optionally comprising at least a first plurality of mapping registers, wherein each mapping register of said first plurality designates a respective bit of the event message source identifier as the source for a respective bit in the system element identifier ($N_{ID}$).

7. The data processing system (1) according to claim 5 or 6, wherein the mapping facility comprises a merge unit that is configured to modify the data processing element identifier by merging therewith one or more padding bits.

8. The data processing system (1) according to one of the previous claims, the event message source identifier comprising a component indicative for a respective coordinate of the message source, wherein the mapping facility comprises a clip module to selectively block input from an event message source if the value of the component is less than a first threshold value and/or to block input from the event message source if the value of the component is greater than a second threshold value.

9. The data processing system (1) according to one of the previous claims, the event message source identifier comprising a component indicative for a coordinate of the message source and the mapping facility being configured to subtract an offset value from the component value, wherein the resulting component value replaces the original component value.

10. The data processing system (1) according to one of the previous claims, wherein the mapping facility is configured to apply an offset value to the system element identifier.

**11.** A method for operating a data processing system (1) as claimed in claim 1, the method comprising:

- with the input facility (50) receiving data from a data array of array elements each having a respective array element address in said data array and comprising a respective data value, and transmitting data event messages having a message content indicative for their data value via the message exchange facility;
- selectively computing at least one system element identifier ($N_{ID}$) as a mapping function of event message source data, in accordance with one or more parameters specified for the mapping function, the event message being directed via the message exchange facility to the data processing system element specified by the computed system element identifier ($N_{ID}$), wherein the mapping function (60) determines the destination of the transmitted data event messages, wherein the array element address and/or the data value are message source data provided as input to the mapping function and wherein the region selection facility (400) identifies one or more regions of interest in the data array and controls the mapping facility (60) to achieve that it provides for a mapping of these one or more regions to respective destinations in the data processing system, wherein the feedback controller (300) uses classification results from the data processing system to dynamically determine a region of interest to control the region selection facility (400), wherein the computation of the at least one system element identifier ($N_{ID}$) comprises a logical AND of a mask specifying the dynamically determined region of interest and a result of a function of an x-coordinate and a y-coordinate in the data array, wherein said function is a sum of the y-coordinate that is binary shifted by a first number and the x-coordinate that is binary shifted by a second number.

.

**Patentansprüche**

**1.** Datenverarbeitungssystem (1) mit

- einer Vielzahl (130) von Datenverarbeitungssystemelementen, die einen jeweiligen Speicherort (10_j) in dem Verarbeitungssystem zum Speichern eines Zustands aufweisen und eine jeweilige Systemelementkennung ($N_{ID}$) aufweisen, die das Datenverarbeitungssystemelement innerhalb des Datenverarbeitungssystems identifiziert;
- einer Nachrichtenaustauscheinrichtung (21, 110, 120), die von der Vielzahl von Datenverarbeitungssystemelementen gemeinsam verwendet wird, wobei die Vielzahl von Datenverarbeitungssystemelementen dazu konfiguriert ist, Ereignisnachrichten über die Nachrichtenaustauscheinrichtung zu übertragen und Ereignisnachrichten, die über die Nachrichtenaustauscheinrichtung übertragen werden, zu empfangen;
- einer Aktualisierungseinrichtung (134) zum Aktualisieren der Zustände jeweiliger Datenverarbeitungssystemelemente gemäß Ereignisnachrichten, die an die jeweiligen Datenverarbeitungssystemelemente gerichtet sind, und die Erzeugung von Ereignisnachrichten zu ermöglichen, die von den jeweiligen Datenverarbeitungssystemelementen gemäß ihrem Zustand übertragen werden sollen;
- einer Abbildungseinrichtung (60), die dazu konfiguriert ist, selektiv mindestens eine Systemelementkennung ($N_{ID}$) als eine Abbildungsfunktion von Ereignisnachrichtenquellendaten zu berechnen, wobei die Ereignisnachricht über die Nachrichtenaustauscheinrichtung an das Datenverarbeitungssystemelement gerichtet ist, das von der berechneten Systemelementkennung ($N_{ID}$) spezifiziert wird,

**dadurch gekennzeichnet, dass** die Abbildungseinrichtung (60) dazu konfiguriert ist, selektiv die mindestens eine Systemelementkennung ($N_{ID}$) gemäß einem oder mehreren Parametern zu berechnen, die für die Abbildungsfunktion (60) spezifiziert sind, dass das Datenverarbeitungssystem weiter eine Eingabeeinrichtung (50) aufweist, die dazu konfiguriert ist, Daten von einem Daten-Array von Array-Elementen zu empfangen und die jeweils eine jeweilige Array-Elementadresse in dem Daten-Array haben und einen jeweiligen Datenwert aufweisen, und Datenereignisnachrichten, die einen Nachrichteninhalt haben, der ihren Datenwert angibt, über die Nachrichtenaustauscheinrichtung zu übertragen, wobei die Abbildungseinrichtung (60) den Zielort der Ereignisnachrichten unter Verwendung der Abbildungsfunktion bestimmt, wobei die Array-Elementadresse und/oder der Datenwert Nachrichtenquellendaten sind, die als Eingabe in die Abbildungsfunktion bereitgestellt werden, dass das Datenverarbeitungssystem weiter eine Bereichsauswahleinrichtung (400) zum Identifizieren eines oder mehrerer Bereiche von Interesse in dem Daten-Array und zum Steuern der Abbildungseinrichtung (60) aufweist, um zu erreichen, dass sie eine Abbildung dieses einen oder der mehreren Bereiche auf jeweilige Zielorte in dem Datenverarbeitungssystem bereitstellt, und dass das Datenverarbeitungssystem weiter einen Feedback-Controller (300) aufweist, der Klassifizierungsergebnisse von dem Datenverarbeitungssystem nutzt, um einen Bereich von Interesse dynamisch zu bestimmen, um damit die Bereichsauswahleinrichtung (400) zu steuern, wobei die Berechnung der mindestens einen Systemelementkennung ($N_{ID}$) ein logisches UND einer Maske, die den dynamisch bestimmten Bereich von Interesse spezifiziert, und ein Ergebnis einer Funktion einer x-Koordinate und einer y-Koordinate in dem Daten-Array, aufweist, wobei die Funktion eine Summe der y-Koordinate, die binär um eine erste Zahl verschoben ist, und der x-Koordinate, die binär um eine zweite Zahl verschoben ist, ist.

2. Datenverarbeitungssystem (1) nach Anspruch 1, wobei die Ereignisnachrichtenquellendaten eine oder mehrere einer Ereignisnachrichtenquellenkennung und eines Werts, der von der Nachricht vermittelt wird, umfassen.

3. Datenverarbeitungssystem (1) nach Anspruch 1 oder 2, wobei die Abbildungseinrichtung dazu konfiguriert ist, selektiv Ereignisnachrichten von einem ersten Teilsatz von Datenverarbeitungssystemelementen an einen zweiten Teilsatz von Datenverarbeitungssystemelementen zu richten, wobei die Systemelementkennung und/oder ein Zustand der Datenverarbeitungssystemelemente in dem ersten Teilsatz Ereignisnachrichtenquellendaten sind, die als Eingabe in die Abbildungsfunktion bereitgestellt werden.

4. Datenverarbeitungssystem (1) nach einem der vorstehenden Ansprüche, wobei die Abbildungseinrichtung eine einer Vielzahl von Abbildungseinrichtungen ist.

5. Datenverarbeitungssystem (1) nach einem der vorstehenden Ansprüche, wobei die Systemelementkennung und die Ereignisnachrichtenquellenkennung eine binäre M-Bit-Darstellung aufweisen, und wobei die Abbildungsfunktion eine oder mehrere einer bitweisen Auswahl und Neuordnung gemäß Parametern umfasst, die für die Abbildungsfunktion spezifiziert sind.

6. Datenverarbeitungssystem (1) nach Anspruch 5, das eine Eingabeauswahleinheit aufweist, mit einer Strukturkennungsstufe (750) und einer Aktivierungsstufe (730, 740), wobei die Strukturkennungsstufe (750) bestimmt, ob ein erster Teilsatz der Ereignisnachrichtenquellenkennung mit einer vorbestimmten Struktur übereinstimmt, und wobei die Aktivierungsstufe (730, 740) selektiv einen zweiten Teilsatz von Bits der Ereignisnachrichtenquellenkennung durchgibt, wenn Übereinstimmung bestätigt wird, wobei optional der erste Teilsatz von Bits die N Bits mit der niedrigsten Signifikanz dieser Komponente sind, wobei N eine Ganzzahl in dem Bereich von 1 bis M-1 ist, wobei optional der erste Teilsatz von Bits die N Bits mit der höchsten Signifikanz dieser Komponente sind, wobei N eine Ganzzahl in dem Bereich von 1 bis M-1 ist, wobei die Abbildungseinrichtung optional mindestens eine erste Vielzahl von Abbildungsregistern aufweist, wobei jedes Abbildungsregister der ersten Vielzahl ein jeweiliges Bit der Ereignisnachrichtenquellenkennung als die Quelle für ein jeweiliges Bit in der Systemelementkennung ($N_{ID}$) bezeichnet.

7. Datenverarbeitungssystem (1) nach Anspruch 5 oder 6, wobei die Abbildungseinrichtung eine Zusammenführungseinheit umfasst, die dazu konfiguriert ist, die Datenverarbeitungselementkennung durch Zusammenführen eines oder mehrerer Auffüllbits damit zu modifizieren.

8. Datenverarbeitungssystem (1) nach einem der vorstehenden Ansprüche, wobei die Ereignisnachrichtenquellenkennung eine Komponente aufweist, die auf eine jeweilige Koordinate der Nachrichtenquelle hinweist, wobei die Abbildungseinrichtung ein Clipmodul aufweist zum selektiven Blockieren von Eingabe von einer Ereignisnachrichtenquelle, wenn der Wert der Komponente kleiner als ein erster Schwellenwert ist, und/oder Blockieren von Eingabe von der Ereignisnachrichtenquelle, wenn der Wert der Komponente größer als ein zweiter Schwellenwert ist.

9. Datenverarbeitungssystem (1) nach einem der vorstehenden Ansprüche, wobei die Ereignisnachrichtenquellenkennung eine Komponente aufweist, die eine Koordinate der Nachrichtenquelle angibt, und die Abbildungseinrichtung dazu konfiguriert ist, einen Offsetwert von dem Komponentenwert zu subtrahieren, wobei der sich ergebende Komponentenwert den ursprünglichen Komponentenwert ersetzt.

10. Datenverarbeitungssystem (1) nach einem der vorstehenden Ansprüche, wobei die Abbildungseinrichtung dazu konfiguriert ist, einen Offsetwert auf die Systemelementkennung anzuwenden.

11. Verfahren zum Betreiben eines Datenverarbeitungssystems (1) nach Anspruch 1, wobei das Verfahren Folgendes umfasst:

    - Empfangen mit der Eingabeeinrichtung (50) von Daten von einem Daten-Array von Array-Elementen, die jeweils eine jeweilige Array-Elementadresse in dem Daten-Array haben und einen jeweiligen Datenwert aufweisen, und Übertragen über die Nachrichtenaustauscheinrichtung von Datenereignisnachrichten, die einen Nachrichteninhalt haben, der ihren Datenwert angibt;

- selektives Berechnen mindestens einer Systemelementkennung ($N_{ID}$) als eine Abbildungsfunktion von Ereignisnachrichtenquellendaten gemäß einem oder mehreren Parametern, die für die Abbildungsfunktion spezifiziert sind, wobei die Ereignisnachricht über die Nachrichtenaustauscheinrichtung zu dem Datenverarbeitungssystemelement gelenkt wird, das von der berechneten Systemelementkennung ($N_{ID}$) spezifiziert wird, wobei die Abbildungsfunktion (60) den Zielort der übertragenen Datenereignisnachrichten bestimmt, wobei die Array-Elementadresse und/oder der Datenwert Nachrichtenquellendaten sind, die als Eingabe in die Abbildungsfunktion bereitgestellt werden, und wobei die Bereichsauswahleinrichtung (400) einen oder mehrere Bereiche von Interesse in dem Daten-Array identifiziert und die Abbildungseinrichtung (60) steuert, um zu erreichen, dass sie eine Abbildung dieses einen oder der mehreren Bereiche auf jeweilige Zielorte in dem Datenverarbeitungssystem bereitstellt, wobei der Feedback-Controller (300) Klassifizierungsergebnisse aus dem Datenverarbeitungssystem verwendet, um dynamisch einen Bereich von Interesse zum Steuern der Bereichsauswahleinrichtung (400) zu bestimmen, wobei die Berechnung der mindestens einen Systemelementkennung ($N_{ID}$) ein logisches UND einer Maske, die den dynamisch bestimmten Bereich von Interesse spezifiziert, und eines Ergebnis einer Funktion einer x-Koordinate und einer y-Koordinate in dem Daten-Array aufweist, wobei die Funktion eine Summe der y-Koordinate, die binär um eine erste Zahl verschoben ist und der x-Koordinate, die binär um eine zweite Zahl verschoben ist, ist.

**Revendications**

1. Système de traitement de données (1), comprenant :

   - une pluralité (130) d'éléments de système de traitement de données ayant un emplacement de stockage respectif (10_j) dans ledit système de traitement de données pour stocker un état et ayant un identificateur d'élément de système respectif ($N_{ID}$) qui identifie l'élément de système de traitement de données au sein dudit système de traitement de données ;
   - un module d'échange de messages (21, 110, 120) partagé par ladite pluralité d'éléments de système de traitement de données, ladite pluralité d'éléments de système de traitement de données étant configurée pour transmettre des messages d'événement par l'intermédiaire du module d'échange de messages et pour recevoir des messages d'événement transmis par l'intermédiaire du module d'échange de messages ;
   - un module de mise à jour (134) destiné à mettre à jour les états des éléments de système de traitement de données respectifs conformément aux messages d'événement dirigés vers lesdits éléments de système de traitement de données respectifs et à permettre la génération de messages d'événement à transmettre par les éléments de système de traitement de données respectifs conformément à leur état ;
   - un module de mise en correspondance (60) configuré pour calculer de manière sélective au moins un identificateur d'élément de système ($N_{ID}$) en tant qu'une fonction de mise en correspondance des données de source de message d'événement, le message d'événement étant dirigé par l'intermédiaire du module d'échange de messages vers l'élément de système de traitement de données spécifié par l'identificateur d'élément de système ($N_{ID}$) calculé,

   **caractérisé en ce que** le module de mise en correspondance (60) est configuré pour calculer de manière sélective l'au moins un identificateur d'élément de système ($N_{ID}$) conformément à un ou plusieurs paramètres spécifiés pour la fonction de mise en correspondance, **en ce que** le système de traitement de données comprend en outre un module d'entrée (50) configuré pour recevoir des données provenant d'un réseau de données d'éléments de réseau ayant chacun une adresse d'élément de réseau respective dans ledit réseau de données et comprenant une valeur de données respective, et pour transmettre des messages d'événement de données ayant un contenu de message indicatif de leur valeur de données par l'intermédiaire du module d'échange de messages, dans lequel le module de mise en correspondance (60) détermine la destination desdits messages d'événement à l'aide de la fonction de mise en correspondance, dans lequel l'adresse d'élément de réseau et/ou la valeur de données sont des données de source de message fournies en entrée à la fonction de mise en correspondance, **en ce que** le système de traitement de données comprend en outre un module de sélection de région (400) pour identifier une ou plusieurs régions d'intérêt dans le réseau de données et pour commander le module de mise en correspondance (60) afin qu'il assure une mise en correspondance de cette ou ces régions vers des destinations respectives dans le système de traitement de données, et **en ce que** le système de traitement de données comprend en outre un contrôleur de rétroaction (300) utilisant des résultats de classification provenant du système de traitement de données pour déterminer de manière dynamique une région d'intérêt afin de commander avec ceux-ci le module de sélection de région (400), dans lequel le calcul de l'au moins un identificateur d'élément de système ($N_{ID}$) comprend une opération ET logique d'un masque spécifiant la région d'intérêt déterminée de manière dynamique et un résultat d'une fonction d'une coordonnée x et d'une coordonnée y dans le réseau de données, dans laquelle ladite fonction est une somme de la coordonnée y qui est décalée par décalage binaire d'un premier nombre et de la coordonnée x qui est décalée par décalage binaire d'un deuxième nombre.

2. Système de traitement de données (1) selon la revendication 1, dans lequel les données de source de message d'événement comprennent un ou plusieurs parmi un identificateur de source de message d'événement et une valeur transportée par ledit message.

3. Système de traitement de données (1) selon la revendication 1 ou 2, dans lequel le module de mise en correspondance est configuré pour diriger de manière sélective des messages d'événement d'un premier sous-ensemble d'éléments de système de traitement de données vers un deuxième sous-ensemble d'éléments de système de traitement de données, dans lequel l'identificateur d'élément de système et/ou un état des éléments de système de traitement de données dans le premier sous-ensemble sont des données de source de message d'événement fournies en entrée à la fonction de mise en correspondance.

4. Système de traitement de données (1) selon l'une quelconque des revendications précédentes, dans lequel le module de mise en correspondance est l'un d'une pluralité de modules de mise en correspondance.

5. Système de traitement de données (1) selon l'une quelconque des revendications précédentes, dans lequel l'identificateur d'élément de système et l'identificateur de source de message d'événement ont une représentation binaire de M bits, et dans lequel la fonction de mise en correspondance comprend un ou plusieurs éléments parmi une sélection et un réordonnancement au niveau des bits conformément à des paramètres spécifiés pour la fonction de mise en correspondance.

6. Système de traitement de données (1) selon la revendication 5, comprenant une unité de sélection d'entrée ayant un étage d'identificateur de motif (750) et un étage d'activation (730, 740), dans lequel l'étage d'identificateur de motif (750) détermine si un premier sous-ensemble de bits de l'identificateur de source de message d'événement est conforme à un motif prédéterminé et dans lequel l'étage d'activation (730, 740) transmet de manière sélective un deuxième sous-ensemble de bits de l'identificateur de source de message d'événement si la conformité est confirmée, dans lequel, éventuellement, le premier sous-ensemble de bits est constitué des N bits les moins significatifs de cette composante, dans lequel N est un nombre entier compris entre 1 et M-1, dans lequel, éventuellement, le premier sous-ensemble de bits est constitué des N bits les plus significatifs de cette composante, dans lequel N est un nombre entier compris entre 1 et M-1, le module de mise en correspondance comprenant éventuellement au moins une première pluralité de registres de mise en correspondance, dans lequel chaque registre de mise en correspondance de ladite première pluralité désigne un bit respectif de l'identificateur de source de message d'événement en tant que la source pour un bit respectif dans l'identificateur d'élément de système ($N_{ID}$).

7. Système de traitement de données (1) selon la revendication 5 ou 6, dans lequel le module de mise en correspondance comprend une unité de fusion qui est configurée pour modifier l'identificateur d'éléments de système de traitement de données en fusionnant avec celui-ci un ou plusieurs bits de bourrage.

8. Système de traitement de données (1) selon l'une quelconque des revendications précédentes, dans lequel l'identificateur de source de message d'événement comprend une composante indicative d'une coordonnée respective de la source de message, dans lequel le module de mise en correspondance comprend un module d'écrêtage pour bloquer de manière sélective l'entrée provenant d'une source de message d'événement si la valeur de la composante est inférieure à une première valeur de seuil et/ou pour bloquer l'entrée provenant de la source de message d'événement si la valeur de la composante est supérieure à une deuxième valeur de seuil.

9. Système de traitement de données (1) selon l'une quelconque des revendications précédentes, dans lequel l'identificateur de source de message d'événement comprend une composante indicative d'une coordonnée de la source de message et le module de mise en correspondance est configuré pour soustraire une valeur de décalage de la valeur de composante, dans lequel la valeur de composante résultante remplace la valeur de composante d'origine.

10. Système de traitement de données (1) selon l'une quelconque des revendications précédentes, dans lequel le module de mise en correspondance est configuré pour appliquer une valeur de décalage à l'identificateur d'élément de système.

**11.** Procédé d'exploitation d'un système de traitement de données (1) selon la revendication 1, le procédé comprenant le fait de :

- à l'aide du module d'entrée (50), recevoir des données provenant d'un réseau de données d'éléments de réseau ayant chacun une adresse d'élément de réseau respective dans ledit réseau de données et comprenant une valeur de données respective, et transmettre des messages d'événement de données ayant un contenu de message indicatif de leur valeur de données par l'intermédiaire du module d'échange de messages ;
- calculer de manière sélective au moins un identificateur d'élément de système ($N_{ID}$) en tant qu'une fonction de mise en correspondance de données de source de message d'événement, le message d'événement étant dirigé par l'intermédiaire du module d'échange de messages vers l'élément de système de traitement de données spécifié par l'identificateur d'élément de système ($N_{ID}$) calculé, dans lequel la fonction de mise en correspondance (60) détermine la destination des messages d'événement de données transmis, dans lequel l'adresse d'élément de réseau et/ou la valeur de données sont des données de source de message fournies en entrée à la fonction de mise en correspondance, et dans lequel le module de sélection de région (400) identifie une ou plusieurs régions d'intérêt dans le réseau de données et commande le module de mise en correspondance (60) afin qu'il assure une mise en correspondance de cette ou ces régions vers des destinations respectives dans le système de traitement de données, dans lequel le contrôleur de rétroaction (300) utilise des résultats de classification provenant du système de traitement de données pour déterminer de manière dynamique une région d'intérêt afin de commander avec ceux-ci le module de sélection de région (400), dans lequel le calcul de l'au moins un identificateur d'élément de système ($N_{ID}$) comprend une opération ET logique d'un masque spécifiant la région d'intérêt déterminée de manière dynamique et un résultat d'une fonction d'une coordonnée x et d'une coordonnée y dans le réseau de données, dans lequel ladite fonction est une somme de la coordonnée y qui est décalée par décalage binaire d'un premier nombre et de la coordonnée x qui est décalée par décalage binaire d'un deuxième nombre.

FIG. 1

FIG. 2

FIG. 3

FIG. 4

FIG. 5

Y coordinate [2:0]      X coordinate [2:0]

Cluster ID [3:0]        Neuron ID
                        [3:0]

FIG. 6

Y coordinate [2:0]      X coordinate [2:0]

Cluster ID [3:0]        Neuron ID
                        [3:0]

FIG. 7

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3343461 A

- US 2016004962 A